# EUROPEAN PATENT APPLICATION

(11) **EP 1 126 380 A1**
(43) Date of publication of application: **22.08.2001**
(21) Application number: 00103172.3
(22) Date of filing: 16.02.2000
(51) Int. Cl.: G06F 17/22

(54) **Converting a formatted document into an XML-document**

(71) Applicant: SUN MICROSYSTEMS, INC., Palo Alto, California 94303 (US)
(72) Inventor: Brauer, Michael, 22149 Hamburg (DE); Breuer, Matthias, 21220 Seevetal (DE); Lippka, Christian, 25358 Hohenfelde (DE)
(74) Representative: Betten & Resch

(57) **Abstract**

A computer readable document containing content data and formatting data is converted into an XML-document whereby the content data and formatting data are separated and are arranged as separate elements in the XML-document. The computer readable document may contain first formatting data which are directly assigned to a formatted object and second formatting data contained in a separate formatting template. On the XMI-document the first formatting data are then arranged in a formatting element and the second formatting data in a parent formatting element referring back to the (child) formatting element.

## Description

### FIELD OF THE INVENTION

The present invention relates to a method of converting a computer readable document containing formatted data objects into an XML-document.

### DESCRIPTION OF THE RELATED ART

Within a short time after its standardization the extended mark-up language XML has become increasingly popular among software developers for world-wide-web applications. XML is on the way to become a world-wide standard for the creation of structured web based documents.

XML can be regarded as a meta-language for describing mark-up languages and provides facilities to define tags and the structural relationships between them. In contrast to the older hypertext mark-up language HTML there does not exist a predefined tag set and consequently no preconceived semantics. All of the semantics of an XML-document will either be defined by the applications that process them or by style sheets (formatting templates).

Among the advantages of XML is a higher flexibility compared with HTML on the one hand combined with a universal compatibility on the other hand. XML-documents are fairly easy to create and to a certain extent human-legible. Further detailed information about XML has e.g. been published by Norman Walsh on October 3, 1998 under www.xml.com.

The objects contained in structured computer readable documents have assigned certain formatting properties. These objects are for example document pages, paragraphs, text portions, tables, images, mathematical formula, 3D graphics, etc.

The formatting properties define, e.g. the character size and style, distance between paragraphs and lines, position on the document and so forth.

It is known to use two different ways of assigning formatting properties to an object, first by assigning a style sheet or formatting template to the object or, secondly, by assigning the formatting properties to the object directly. In the first case the formatting template e.g. defining text formatting properties is applied to a text portion like a paragraph. The formatting template then defines the formatting properties of the whole text portion. In the second case a format is directly defined for a selected document portion by the user choosing the character size and style, paragraph properties, etc. by keyboard or mouseclick.

It is known to use formatting templates as so called parent formatting templates for dependent formatting templates. The dependent or child formatting template refers to the parent formatting template and uses all formatting properties defined therein but additionally defines new ones or amends some of these. For example, a parent formatting template may be "headline 1" for a text document. The dependent formatting property "headline 2" uses all formatting properties of "headline 1" with the exception that the character size is reduced. In addition it is possible to use a formatting template and nevertheless directly assign (hard formatting) some properties of particular parts of the formatted object.

In an XML-document the style of every object contained in the XML-document is represented by a style element. The formatting properties of the object are contained in the style element either as XML attributes or as separate XML elements. For converting a non-XML-document like a text document containing hard formatting attributes it is known to convert the hard or direct formatting properties into style attributes of the respective XML element and to convert formatting templates into separate XML elements. This is illustrated in the following example:

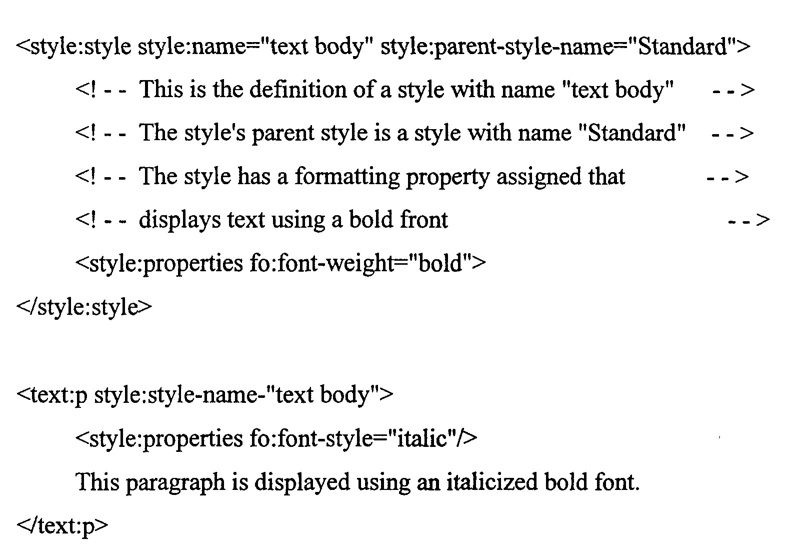

In this example the first paragraph represents an XML element defining a particular style named "text body", which is based on the parent style "Standard" and displays a text to which this style is assigned using a bold font in addition to the properties defined by the parent style "Standard". This XML element is the XML counterpart of a formatting template.

The second paragraph in the example contains content i.e. the text "This paragraph is displayed using an italicized bold font", and refers to the first XML element defining the style "text body" and additionally contains a style property as attribute i.e. that the font style should be "italic". The attribute is the XML counterpart of a hard formatting property.

This XML representation of documents containing formatting properties has the disadvantage that content and layout are mixed in the XML representation as in the second XML element in the above described example. This is undesirable, in particular if in the XML-document only the content or only the style has to be edited and changed.

It is therefore an object of the present invention to provide an XML representation of a computer readable document containing hard formatting properties which allows an easy amendment of the content as well as the style properties of the XML-document.

### SUMMARY OF THE INVENTION

In accordance with the present invention the above problem has been solved by a method of converting a computer readable document containing content data and formatting data into a structured markup document comprising the steps of separating the content data from the formatting data and arranging the content data and the formatting data as separate elements of the structured markup document.

The method according to the present invention allows a separation of content data and formatting data on the markup document, which is highly desirable with regards to amending and/or editing the document. Preferrably the markup document is an XML-document, but other document types and file formats may also be possible, like e.g. SGML.

According to a preferred embodiment of the present invention the document to be converted contains first formatting data which are directly assigned to a formatting object and second formatting data contained in a separate formatting template, wherein, in the XML-document, the first formatting data are included in a formatting element and the second formatting data are included in a parent formatting element, wherein the formatting element (child formatting element) makes reference to the parent formatting element. The hard formatting properties of the original document are thus converted into an XML formatting element and a formatting template into a parent formatting element, to which the (child) formatting element refers and is dependent on. A parent formatting template on the original document consequently becomes a "grandparent" formatting element in the XML-document.

If a particular style is used by many objects a plurality of content elements and/or formatting elements may refer to the same formatting element, thus reducing the overall volume of the XML-document.

A formatting element of the XML-document may be assigned an identifier like a flag indicating that the formatting data are obtained by conversion of hard formatting data. So a reconversion into directly assigned (hard formatted) style properties is possible.

A further implementation of the present invention provides a computer system for converting a computer readable document containing content data and formatting data into an XML-document having means for separating the content data and formatting data and for arranging the content data as content elements and the formatting data as separate formatting elements in the XML-document.

A still further implementation of the present invention provides a computer program for converting a computer readable document containing content data and formatting data into an XML-document comprising program code adapted for separating content data and formatting data and for arranging the content data and formatting data as separate elements in the XML-document.

A program code may be embodied in any form of a computer program product. A computer program product comprises a medium which stores or transports computer readable code, or in which computer readable code may be embedded. Some examples of computer program products are CD-ROM discs, ROM cards, floppy discs, magnetic tapes, computer hard drives, servers on a network and signals transmitted over a network representing a computer readable program code.

A still further implementation of the present invention provides a storage medium comprising, represented in XML code, first data elements containing content data, second data elements containing formatting data obtained by converting formatting data contained in a formatting template in a computer readable document and third data elements containing formatting data obtained by converting formatting data directly assigned to objects contained in the computer readable document.

A great advantage and utility of the present invention is that content data and formatting data are separated on the XML-document resulting from the conversion procedure irrespective of the type of format assignment used in the original document. Embodiments of the invention provide that amendments of the style and/or the content of the XML-document can be carried out easily. This greatly improves the utility of the XML-document.

Moreover, one formatting element may be employed by a plurality of other formatting elements (the former thus being parent formatting elements) or content elements. The overall document size can thus be reduced.

The above mentioned and other features, utilities and advantages of the invention will be apparent from the following detailed description of preferred embodiments of the invention as illustrated in the accompanying drawings.

### BRIEF DESCRIPTION OF THE DRAWINGS

Figure 1 is a flow chart illustrating an embodiment of the present invention.

Figure 2 is a flow chart illustrating additional method steps of a second embodiment of the present invention.

Figure 3 is a schematic illustration of a document to be converted and the resulting XML-document.

Figure 4 is a flow chart illustrating a further embodiment of the present invention.

Figure 5 is a schematic illustration of a computer system to which the present invention may be applied.

Figure 6 is a schematic illustration of a client-server configuration to which the present invention may also be applied.

### DETAILED DESCRIPTION OF PREFERRED EMBODIMENT

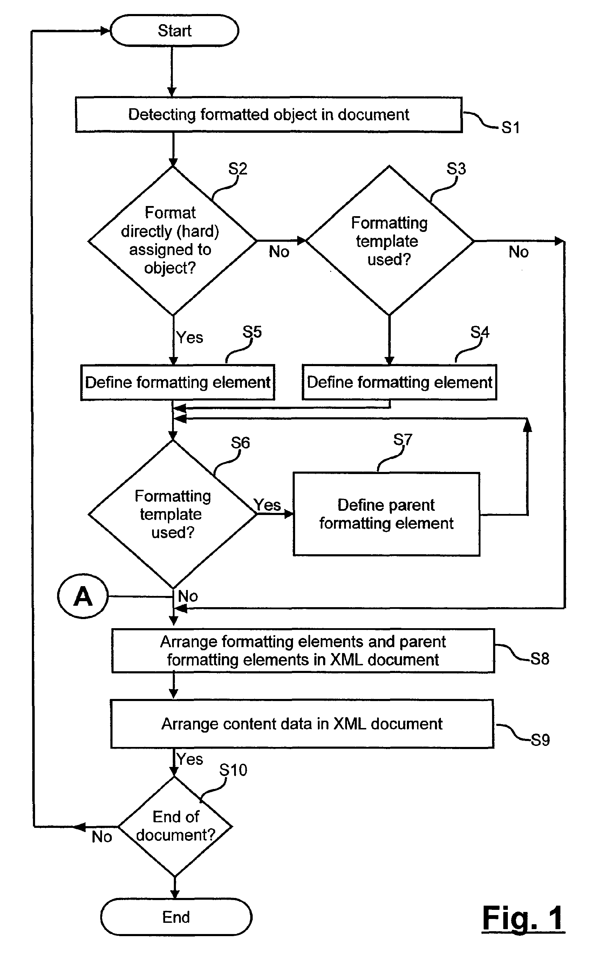

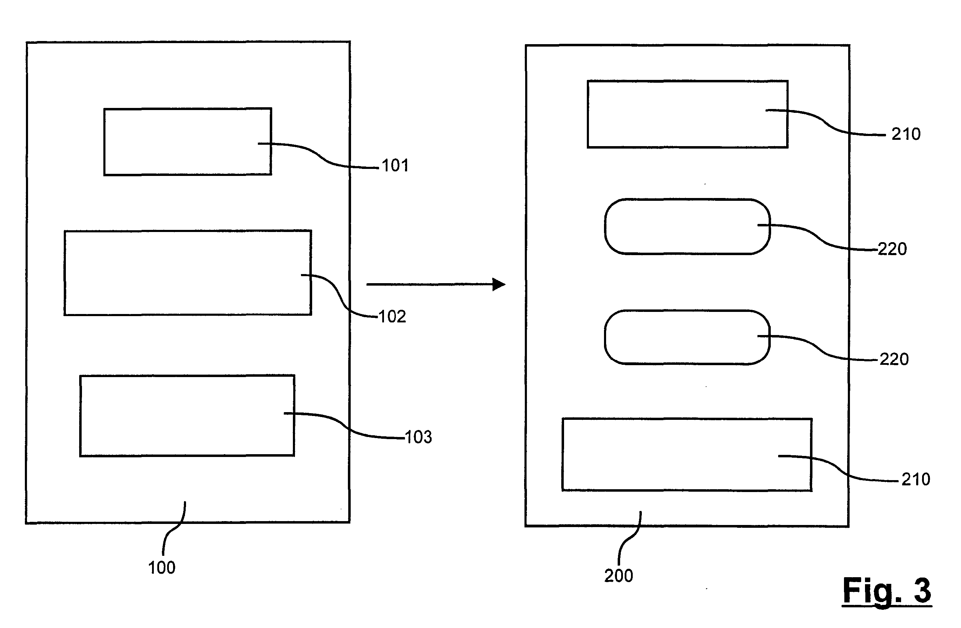

The flow chart of Figure 1 schematically illustrates the method according an embodiment of the present invention. In step S1 a formatted object in the computer readable document which has to be converted into an XML-document is detected. Figure 3 shows on the left side a schematic illustration of such a computer readable document 100. The document contains a plurality of formatted objects 101, 102, 103. The format of an object may contain hard (or direct) formatting properties or may alternatively be wholly defined by a formatting template. Any formatting template may possibly refer back to a parent formatting template.

Referring again to Figure 1, step S2 checks whether or not the object detected in step S1 contains formatting features which are directly (hard) assigned to the object. If this is the case a formatting element is defined in step S5 as will be explained in detail hereinbelow. If, on the other hand, the result in step S2 is NO, step S3 checks whether or not a formatting template is used for assigning the format to the object detected in step S1. If the answer is YES, a formatting element corresponding to the formatting template is created in step S4.

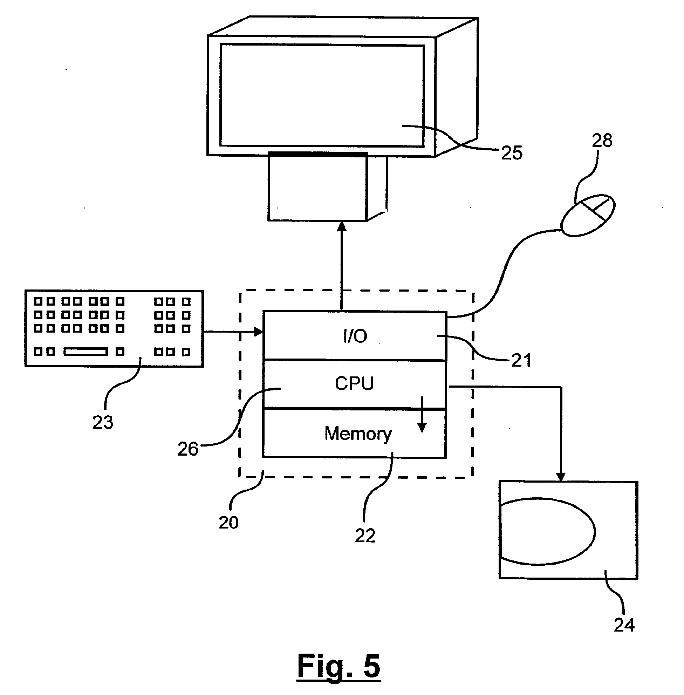

The method then proceeds to step S6 to check whether a (further) formatting template is assigned to the object to be converted. If this is the case the formatting template will form a parent formatting element in the XML-document (step S7). Method steps S6 and S7 are subsequently repeated for additional properties of the current object, the formatting element generated in step S7 then being a grandparent formatting element. When all formatting properties of the current object have been processed the method proceeds to step S8 in which the formatting elements and parent formatting elements are arranged in the XML-document. Subsequently, in method step S9 the content data are arranged in the XML-document separate from the content elements. The order of method steps S8 and S9 is not of importance; the formatting elements can also be arranged in the XML-document after the content elements. In method step S10 it is checked whether the last object of the document to be converted has being processed or not. In the latter case the method returns to step S1 and detects the proceeding formatted object. Otherwise the conversion operation is finished and the completed XML-document may be displayed on a display screen or stored in a suitable memory device (Figure 5).

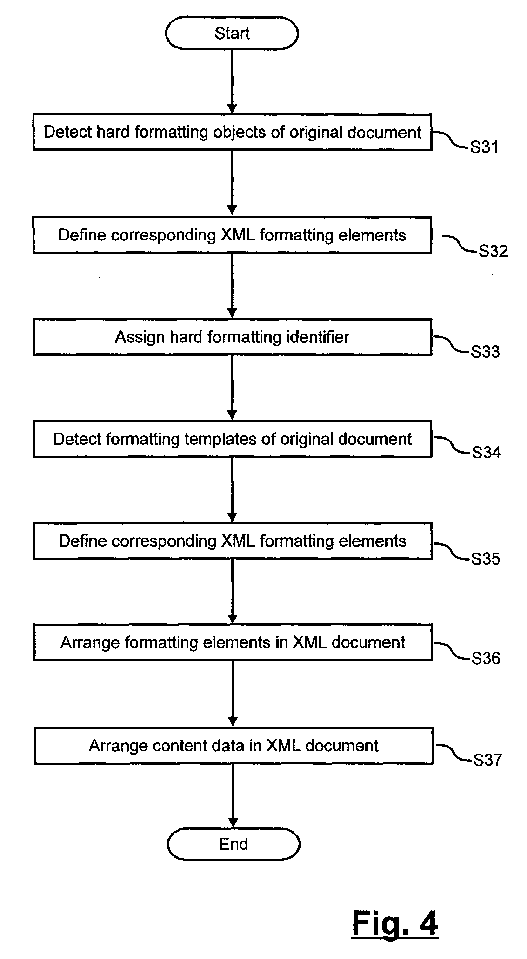

Alternatively, instead of detecting the templates and hard formatting properties of every object and defining the respective XML formatting elements for every object, it is also possible to detect and convert all templates and then all hard formatting properties of the whole document. This embodiment is illustrated in Figure 4. In step S31 all had formatting objects of the original document to be converted are detected. In step S32 corresponding XML formatting elements of the detected hard formatting objects are defined. In step S33 a hard formatting identifier is assigned to each of the XML formatting elements.

In step S34 the formatting templates (including parent formatting elements, grandparent formatting elements, etc.) of the original document are detected and the corresponding XML formatting elements are then created in subsequent method step S35. As in the embodiment described in connection with Figure 1 the formatting elements and the content data are then arranged in the XML-document in steps S36 and S37.

The finished XML-document is schematically represented on the right hand side of Figure 3. The XML-document as a whole is designated by numeral 200 containing content elements 210 and separate formatting elements 220.

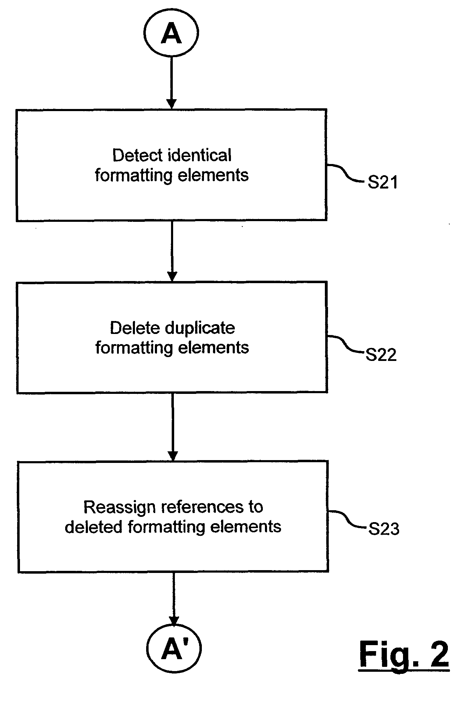

A further advantageous embodiment of the present invention is explained with reference to Figure 2. Three additional optional method steps S21, S22 and S23 are carried out at point A in the flow chart of Figure 1. In step S21 multiple identical formatting elements are detected and duplicate formatting elements are subsequently deleted in step S22. Then, in method step S23, the references to the deleted formatting elements are reassigned to the remaining one of the detected identical formatting elements. With these additional method steps unnecessary duplicate formatting elements can be avoided in the XML-document thus reducing the XML-document size.

The operation of defining a formatting element or a parent formatting element is now described using the example at the beginning of the description.

The original document to be converted into an XML-document contains, as an object, a text paragraph reading:
***This paragraph is displayed using an italicized bold font.***

In the example it is assumed that, like in the example at the beginning, the style of the paragraph is defined by a parent formatting template called "Standard", a formatting template called "text body" and the hard formatting property "italic letters".

In the XML-document this paragraph is represented as follows:

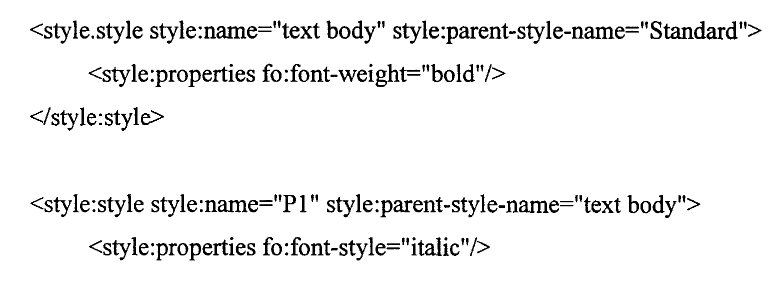

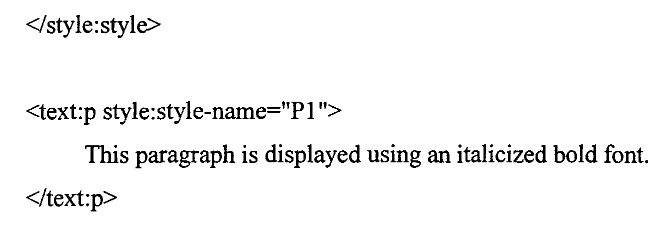

In this example the first XML element defines the style "text body" employing the parent style "Standard" not shown in the example.

The second XML element defines the style "P1" employing a style "text body" as parent style. "Standard" thus now becomes a grandparent style. The style "P1" defines, in addition to the properties of "text body", that the font style should be italic.

The third XML element in the example is the content element which does not contain any style attributes. The style is fully defined by reference to the formatting template with the name "P1". Content and formatting properties are thus separated.

According to a further preferred embodiment of the present invention it is possible to insert a flag into a formatting element which indicates that the formatting element is derived from a hard formatting property. With this flag it is possible to reconvert the formatting element into the hard formatted object in the original document format. The operation of providing this hard formatting flag may be carried out in method step S5 of the flow chart shown in Figure 1. Instead of inserting a flag into the formatting element it is also possible to assign a hard formatting identifier to the formatting element, which is arranged at a different position in the XML-document (step S33 in Fig.4).

The present invention is applicable to a hardware configuration like a personal computer or work station as illustrated schematically in Figure 5. The computer may comprise a central processing unit CPU 26, an input output I/O unit 21, an internal memory 22 and an external memory 24. The computer further comprises standard input devices like a keyboard 23, a mouse 28 or speech processing means (not illustrated).

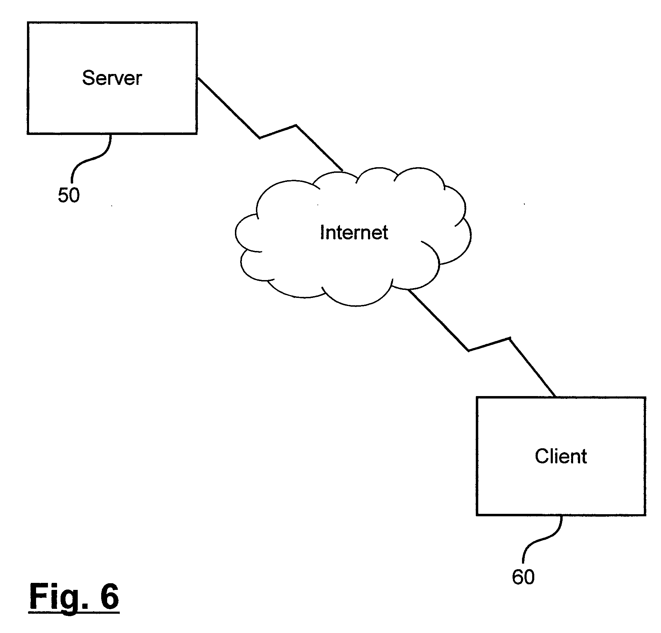

The invention, however, may also be applied to a client-server configuration as illustrated in Figure 6. The document may be displayed on a display screen of a client device 60 while some or all steps of the method as illustrated before in Figures 1 and 2 are carried out on a server computer 50 accessible by the client device 60 over a data network as the internet using a browser application or the like.

While the invention has been particularly shown with reference to a preferred embodiment thereof, it will be understood by those skilled in the art that various other changes in the form and details may be made therein without departing from the spirit and scope of the invention.

## Claims

1. A method of converting a computer readable document (100) containing content data and formatting data into a structured markup document (200), comprising the steps of separating content data and formatting data and arranging the content data and the formatting data in separate elements of the structured markup document (200).

2. The method of claim 1, wherein the structured markup document is an XML-document.

3. The method of claim 2, wherein the computer readable document (100) contains first formatting data which are directly assigned to a formatted object and second formatting data contained in a separate formatting template, comprising, in the XML-document (200), arranging the first formatting data in a formatting element and the second formatting data in a parent formatting element, wherein the formatting element comprises a reference to the parent formatting element.

4. The method of claim 2 or 3, wherein one formatting element (220) of the XML-document (200) is referenced by a plurality of content elements (210) and/or formatting elements (220) of the XML-document (200).

5. The method of claim 3 or 4, wherein the formatted objects of the computer readable document include pages, paragraphs, text portions, images, tables, mathematical formula, etc.

6. The method of one of claims 3 to 5, comprising the step of assigning a hard formatting identifier to a formatting element representing first formatting data.

7. A computer system for converting a computer readable document (100) containing content data and formatting data into an XML-document (200), comprising:
means (20) for separating the content data and formatting data and for arranging the content data as content elements (210) and the formatting data as formatting elements (220) in the XML-document (200).

8. The computer system of claim 7, wherein the computer readable document contains first formatting data which are directly assigned to a formatted object and second formatting data contained in a separate formatting template, wherein, in the XML-document, the first formatting data are arranged in a formatting element and the second formatting data are arranged in a parent formatting element, wherein the formatting element comprises a reference to the parent formatting element.

9. The computer system of claim 7 or 8, wherein one formatting element of the XML-document is referenced by a plurality of content elements and/or formatting elements of the XML-document.

10. The computer system of claim 8 or 9, wherein the formatted objects of the computer readable document include pages, paragraphs, text portions, images, mathematical formula, etc.

11. A computer program for converting a computer readable document (100) containing content data and formatting data into a structured markup document (200), comprising program code adapted for separating content data and formatting data and arranging the content data and the formatting data in separate elements of the structured markup document (200).

12. The computer program of claim 11, wherein the structured markup document is an XML-document.

13. The computer program of claim 12, wherein the computer readable document contains first formatting data which are directly assigned to a formatted object and second formatting data contained in a separate formatting template, the computer program comprising program code adapted for, in the XML-document, arranging the first formatting data in a formatting element and the second formatting data in a parent formatting element, wherein the formatting element comprises a reference to the parent formatting element.

14. The computer program of claim 12 or 13, wherein one formatting element of the XML-document is referenced by a plurality of content elements and/or formatting elements of the XML-document.

15. The computer program of claim 13 or 14, comprising program code adapted for inserting a hard formatting flag into a formatting element of the XML-document representing first formatting data of the original document to be converted.

16. A computer program product for converting a computer readable document containing content data and formatting data into an XML-document, comprising program code adapted for separating content data and formatting data and arranging the content data and the formatting data in separate elements of the XML-document.

17. A storage medium comprising, represented in a markup code:
- first data elements containing content data;
- second data elements containing formatting data obtained by converting formatting data contained in a formatting template of a computer readable document; and
- third data elements containing formatting data obtained by converting formatting data directly assigned to objects contained in the computer readable document.

18. The storage medium of claim 17, wherein the third data elements contain hard formatting flags.

19. The storage medium of claim 17 or 18, wherein the markup code is XML code.
